# EUROPEAN PATENT APPLICATION

(11) **EP 2 256 604 A1**
(43) Date of publication of application: **01.12.2010**
(21) Application number: 10009519.9
(22) Date of filing: 18.02.2005
(51) Int. Cl.: G06F 3/048, H04M 1/725, G06F 17/21, G06F 3/023

(54) **Portable information apparatus, character display method and program product for implementing the method**

(30) Priority: 25.02.2004 JP 2004049010
(62) Divisional of application: 05003578.1
(71) Applicant: Sharp Kabushiki Kaisha, Osaka-shi, Osaka 545-8522 (JP)
(72) Inventor: Daioku, Shuji, Higashihiroshima-shi Hiroshima (JP)
(74) Representative: Müller - Hoffmann & Partner

(57) **Abstract**

A portable information apparatus that enables its user to readily confirm an effect of modification of a displayed manner of a character during editing is provided.
A character color modification process that is carried out by a control unit of a portable telephone as an embodiment of the portable information apparatus includes the steps of generating data (S804, S806) for displaying a character color palette and a preview area, outputting the respective data for display (S808) to a VRAM, acquiring identification information of the color (S816) corresponding to the cursor position in response to the cursor movement (YES in S814), and generating the data (S818) for displaying the preview area by changing the character color of an illustrative character string to the color corresponding to the cursor position.

## Description

This nonprovisional application is based on Japanese Patent Application No. 2004-049010 filed with the Japan Patent Office on February 25, 2004, the entire contents of which are hereby incorporated by reference.

### BACKGROUND OF THE INVENTION

### Field of the Invention

The present invention relates to a character displaying process in a portable information apparatus having a display area. More particularly, the present invention relates to a portable information apparatus capable of displaying characters during editing together with an effect when decoration of the characters during editing is modified, a method for displaying the characters during editing and the effect of modification of their decoration, and a program product for implementing the method in a personal information apparatus.

### Description of the Background Art

Mobile phones and other portable information apparatuses have, in addition to the conventional communication function, a character editing function, such as an e-mail preparation function, and other functions. A user is allowed to set prepared items for the respective functions in accordance with his/her usage. When the user selects an item for modification of setting, he/she can confirm the effect of the setting modification only after he/she validates the setting. This involves the problem that it is difficult for the user to confirm the effect when modifying the setting in the portable information apparatus. When the user has selected wrong setting, it is only after the setting comes into effect when he/she notices the erroneous setting, in which case the user needs to repeat the required operation, causing inconvenience.

To solve the above-described problem, for example Japanese Patent Laying-Open No. 2001-308991 discloses a function setting device that can improve operability upon setting of function of a portable information apparatus from a visual aspect. This function setting device includes a display portion that displays a plurality of setting items related to the function setting of the portable information apparatus to a user, a setting item color decision portion that makes background colors of the respective setting items to different colors, and a display screen color decision means, responsive to the user's selection of the setting item, for changing the color of the screen of the display portion to the same color as the background color of the setting item selected.

According to the function setting device disclosed in Japanese Patent Laying-Open No. 2001-308991, the user can select the color from the start to thereby select the corresponding function, and also can confirm whether the selected color is correct. This enables visual recognition of the select operation, making the portable information apparatus more convenient.

Further, for example Japanese Patent Laying-Open No. 2002-297288 discloses a portable information terminal device. This terminal device includes display means, and select means that receives a command input for selecting one of a plurality of selectable information items displayed on the display means. The select means includes identification information means that identifies and displays the relevance with a prescribed selectable information item. The select means, in response to the command input, selects the selectable information item for which the relevance is being identified and displayed by the identification display means.

According to the portable information terminal device disclosed in Japanese Patent Laying-Open No. 2002-297288, the select means can readily and efficiently select one of the plurality of selectable information items since it can easily grasp the relevance with the selectable information item.

With the portable information terminal device of Japanese Patent Laying-Open No. 2002-297288, however, an effect by the selected information cannot be confirmed until it is reflected to the display means.

Particularly, in a portable information terminal having a small display area compared to a personal computer (PC), for example when a user is to modify a typeface on a text editing screen, the typeface after modification is confirmed only after it is reflected to the editing screen. This poses a problem that, when various typefaces are to be reflected to a text, confirmation thereof requires time, hindering efficient document preparation.

### SUMMARY OF THE INVENTION

The present invention has been made to solve the above-described problems. An object of the present invention is to provide a portable information apparatus that enables a user to readily confirm an effect of modification of a displayed manner on a screen.

Another object of the present invention is to provide a portable information apparatus that can efficiently edit a text having various displayed manners.

A further object of the present invention is to provide a method for efficiently editing a text having various displayed manners in a portable information apparatus.

Yet another object of the present invention is to provide a program product for implementing in a portable information apparatus a function of efficiently editing a text having various displayed manners.

To solve the above-described problems, according to an aspect of the present invention, a portable information apparatus includes: a storage unit storing, associating with a plurality of decoration functions of a character, image data for displaying images each associated with corresponding one of the plurality of decoration functions, and a plurality of processing programs each for implementing corresponding one of the plurality of decoration functions; an input unit receiving an external input; a display data generation unit generating, in response to an input to select one of the decoration functions, display data for displaying the corresponding image and the character to which the selected decoration is reflected, based on the corresponding image data and the processing program associated with the selected decoration function; and a display unit displaying the corresponding image and the character to which the selected decoration is reflected, based on the display data.

According to another aspect of the present invention, a portable information apparatus includes: a storage unit storing, associating with a plurality of decoration functions of a character, image data for displaying images each associated with corresponding one of the plurality of decoration functions, an input unit receiving an external input; a plurality of processing units each implementing corresponding one of the plurality of decoration functions; a display data generation unit generating, in response to an input to select one of the decoration functions, display data for displaying the corresponding image and the character to which the selected decoration is reflected, based on the corresponding image data and the selected decoration function implemented by the processing unit; and a display unit displaying the corresponding image and the character to which the selected decoration is reflected, based on the display data.

Preferably, the processing units are processing circuits each preconfigured to implement corresponding one of the plurality of decoration functions.

Preferably, the storage unit further stores area data representing a range of a predetermined area in an image display area of the display unit. The input unit receives an external input of a character. The portable information apparatus further includes a character data generation unit generating, in response to the input of the character, character data for displaying the character based on the area data. The display data generation unit generates the display data based on the area data, and the display unit displays the corresponding image, the input character and the character to which the selected decoration is reflected, based on the display data and the character data.

Preferably, the area data includes data representing a range of a character display area where the input character is displayed and range data representing a range of a preview display area having an area at least overlapping the character display area. The display data generation unit generates the display data by associating the same with the range data.

Preferably, the input unit receives an input for selecting a character as an object of modification of the decoration function. The display data generation unit generates the display data in accordance with the character selected as the object of modification of the decoration function.

Preferably, the storage unit stores character data for displaying a predetermined character for each of the decoration functions by associating the same with the decoration function. The display data generation unit generates the display data based on the character data corresponding to the decoration function for which modification was designated.

Preferably, the predetermined character includes a character representing the decoration function for which the modification was designated.

Preferably, the input unit receives selection of at least one character and an input of a selected option of the decoration function. The display data generation unit generates the display data by modifying the decoration function of the at least one character selected, to the decoration function specified as the selected option.

Preferably, the input unit includes a plurality of buttons arranged based on a predetermined positional relation. The storage unit stores each of the plurality of buttons by associating the same with corresponding one of the image data based on the positional relation. The display data generation unit generates the display data, in response to depression of any of the plurality of buttons, based on the image data associated with the depressed button.

According to a further aspect of the present invention, a character display method in a portable information apparatus includes: the step of preparing, associating with a plurality of decoration functions of a character, image data for displaying images each associated with corresponding one of the plurality of decoration functions, and a plurality of processing programs each for implementing corresponding one of the plurality of decoration functions; the step of receiving an external input; the step of generating, in response to an input to select one of the decoration functions, display data for displaying the corresponding image and the character to which the selected decoration is reflected, based on the corresponding image data and the processing program associated with the selected decoration function; and the step of displaying the corresponding image and the character to which the selected decoration is reflected based on the display data.

According to yet another aspect of the present invention, a program product implements a character display method in a portable information apparatus. The program product causes the portable information apparatus to perform: the step of preparing, associating with a plurality of decoration functions of a character, image data for displaying images each associated with corresponding one of the plurality of decoration functions, and a plurality of processing programs each for implementing corresponding one of the plurality of decoration functions; the step of receiving an external input; the step of generating, in response to an input to select one of the decoration functions, display data for displaying the corresponding image and the character to which the selected decoration is reflected, based on the corresponding image data and the processing program associated with the selected decoration function; and the step of displaying the corresponding image and the character to which the selected decoration is reflected based on the display data.

According to a still further aspect of the present invention, a character display method in a portable information apparatus includes: the step of preparing, associating with a plurality of decoration functions of a character, image data for displaying images each associated with corresponding one of the plurality of decoration functions; the step of receiving an external input; the processing steps each implementing corresponding one of the plurality of decoration functions; the step of generating, in response to an input to select one of the decoration functions, display data for displaying the corresponding image and the character to which the selected decoration is reflected, based on the corresponding image data and the selected decoration function implemented by the processing step; and the step of displaying the corresponding image and the character to which the selected decoration is reflected based on the display data.

According to yet another aspect of the present invention, a program product implements a character display method in a portable information apparatus. The program product causes the portable information apparatus to perform: the step of preparing, associating with a plurality of decoration functions of a character, image data for displaying images each associated with corresponding one of the plurality of decoration functions; the step of receiving an external input; implementing corresponding one of the plurality of decoration functions; the step of generating, in response to an input to select one of the decoration functions, display data for displaying the corresponding image and the character to which the selected decoration is reflected, based on the corresponding image data and the selected decoration function implemented by the processing step; and the step of displaying the corresponding image and the character to which the selected decoration is reflected based on the display data.

According to the portable information apparatus of the present invention, when a user modifies character decoration while editing the characters, the character having one of a plurality of functions selected as an option of modification reflected thereto is displayed, in addition to the characters during editing. This allows the user to edit the characters while confirming the effect of modification of character color or other decoration, thereby enabling efficient document preparation. Further, the user can edit the characters without switching the screen.

Furthermore, according to the portable information apparatus of the present invention, the user can edit the characters while selecting an item by manipulation of a cursor key, numeric button or other operation button to modify the character decoration. This improves operability at the time of editing.

According to a display method in a portable information apparatus of the present invention, when a user modifies character decoration while editing texts, the effect of the function selected by the user as an option of modification is displayed in advance in an area different from the character display area. This allows the user to edit the characters while confirming the effect of modification of the character color or other decoration, ensuring efficient document preparation.

According to a program product for implementing a display method of the present invention, when a user modifies character decoration while editing texts, the portable information apparatus displays the effect of the function selected by the user as an option of modification in advance in an area other than the character display area. With this configuration, the user can edit the texts while confirming the effect of modification of the character color or other decoration, which enables efficient document preparation.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows an appearance of a mobile phone according to an embodiment of the present invention.
Fig. 2 is a block diagram showing a functional configuration of the mobile phone according to the embodiment of the present invention.
Figs. 3-5 show data structures in the mobile phone according to the embodiment of the present invention.
Figs. 6-9 are flowcharts illustrating procedures of the processes carried out by the mobile phone according to the embodiment of the present invention.
Figs. 10A-11B illustrate screens displayed in the mobile phone according to the embodiment of the present invention.
Figs. 12A-12B illustrate screens displayed in a mobile phone according to a modification of the embodiment of the present invention.

### DESCRIPTION OF THE PREFERRED EMBODIMENTS

Hereinafter, an embodiment of the present invention will be described with reference to the drawings. In the following description, the same portions are denoted by the same reference characters, and their names and functions are identical. Thus, detailed description thereof will not be repeated where appropriate.

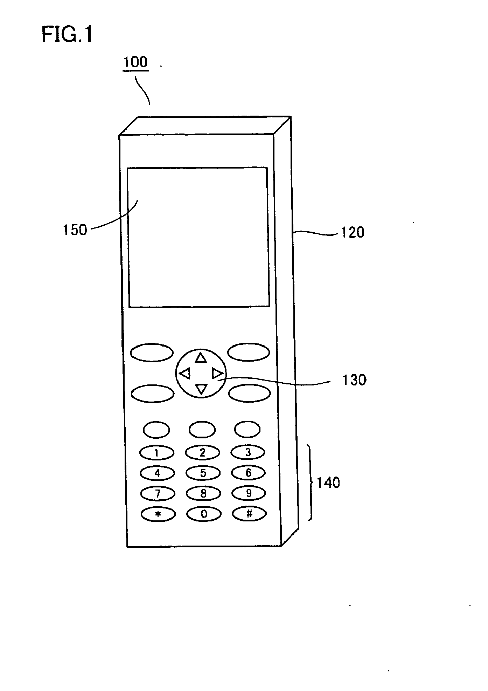

Referring to Fig. 1, a mobile phone 100 according to an embodiment of the present invention is explained. The present invention is applicable, not only to a mobile phone, but also to a personal digital assistant (PDA) and other portable information apparatuses having a small-size display area.

As shown in Fig. 1, mobile phone 100 includes a casing 120, a display 150 arranged on casing 120, an operation button 130 for moving a cursor displayed on display 150 and selecting an item where it has reached, and 12 keys 140. The configuration of mobile phone 100 is not restricted to the one shown in Fig. 1; it may be a folding mobile phone.

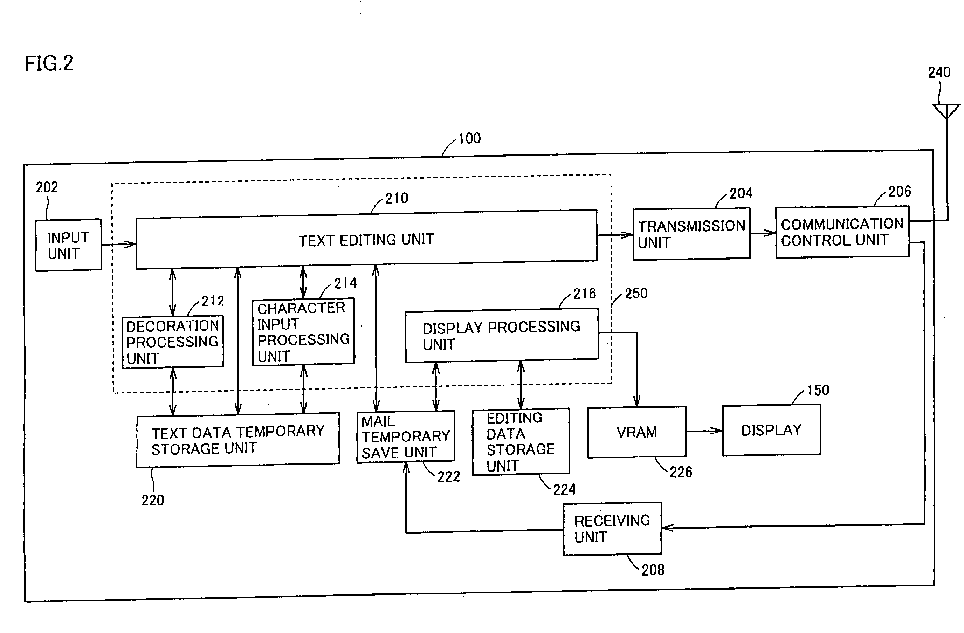

Referring to Fig. 2, functions of mobile phone 100 are explained. As shown in Fig. 2, mobile phone 100 includes an input unit 202 for receiving an external input, a control unit 250 for executing prescribed processes based on input commands and prepared data, a transmission unit 204, a communication control unit 206, a text data temporary storage unit 220 for temporarily storing input text data in a prescribed data area, a mail temporary save unit 222 for temporarily storing mail data as an object of editing, an editing data storage unit 224 for storing prepared, character decoration data for decorating the text, a video random access memory (VRAM) 226, a receiving unit 208, and an antenna 240. Control unit 250 includes a text editing unit 210 for executing text editing (new document preparation, alternation and others) based on the input data, a decoration processing unit 212 for decorating a selected character based on the character decoration data, a character input processing unit 214, and a display processing unit 216.

Control unit 250, as will be described later, executes predetermined processes based on the data stored in the memories, in accordance with the inputs from input unit 202. The results of the processes are written into the relevant memories. The results are displayed as images by display 150 or other output means, or audio-output via a speaker (not shown). As such, control unit 250 implements functions that are equivalent for example to those of a central processing unit (CPU) in a computer.

A signal output from input unit 202 is input to control unit 250. Control unit 250 writes data to and reads data from text data temporary storage unit 220, mail temporary save unit 222, editing data storage unit 224, and VRAM 226. A signal output from control unit 250 is input to transmission unit 204. A signal output from transmission unit 204 is input to communication control unit 206. Communication control unit 206 sends out a transmission signal via antenna 240. Communication control unit 206 outputs a signal received via antenna 240 to receiving unit 208. Data output from receiving unit 208 is stored in mail temporary save unit 222.

Input unit 202 serves as input means for receiving a command from a user of mobile phone 100. Input unit 202 includes for example 12 keys 140 and operation button 130, shown in Fig. 1, and other buttons. The command input by the user via input unit 202 is input to text editing unit 210. Text editing unit 210 transmits necessary data to and from decoration processing unit 212 or character input processing unit 214, in accordance with the input signal. Decoration processing unit 212 is for performing decoration processes on the text displayed on display 150. The decoration processes include, e.g., modification of size of text, modification of color of character, modification of typeface, and other processes generally included as the text editor functions. Character input processing unit 214 receives characters (e.g., alphabetical characters, Japanese syllabary characters or the like) input by the user via input unit 202, and temporarily stores them in .a data area in text data temporary storage unit 220.

The mail received by receiving unit 208 via antenna 240 is stored in mail temporary save unit 222, and read by text editing unit 210. The read mail is written via display processing unit 216 to VRAM 226, and displayed on display 150.

Editing data storage unit 224 prestores necessary data for editing input text in accordance with a user's command. The data may include, e.g., correspondence between 12 keys 140 and the functions assigned to the respective keys at the time when mobile phone 100 is in a document decoration mode. The data structure in editing data storage unit 224 will be described later.

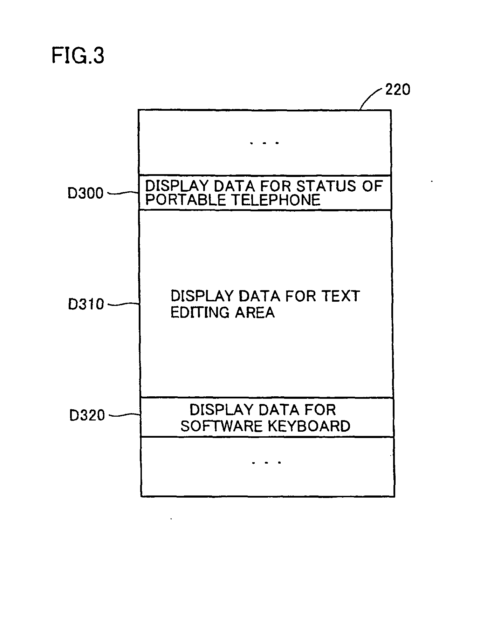

Referring to Fig. 3, a data structure in mobile phone 100 according to the present embodiment is explained. Fig. 3 illustrates by way of example how data are stored in text data temporary storage unit 220 of mobile phone 100. The data are prestored in a read-only memory (ROM) or other non-volatile memory (not shown), and read out of the ROM, in response to activation of a necessary program, to corresponding data areas of a RAM or other text data temporary storage unit 220. Besides the ROM, the data may be stored in an erasable and programmable ROM (EPROM) or other memory.

As shown in Fig. 3, status display data of mobile phone 100 is stored in a data area D300. The status display data include information about, e.g., a receiving status, a charged status of a battery (not shown), and other working statuses of mobile phone 100.

Display data for the text editing area is stored in a data area D310. This corresponds to the data being displayed on a text editing screen in the display area of display 150. When the user calls up a text editing screen and conducts a prescribed character input operation for preparing a new mail, document or the like, data corresponding to the input characters is stored in data area D310 as the display data.

Display data for a software keyboard is stored in a data area D320. With predetermined functions being assigned to respective buttons (not shown) arranged on casing 120 of mobile phone 100, each key of the keyboard has its own function displayed on display 150. The function is set for the screen being displayed on display 150. The keyboard is switched in accordance with the screen of display 150, and the user can implement different functions, using the same key, depending on which screen is being displayed at the time.

The data stored in text data temporary storage unit 220 are read by text editing unit 210 and written into VRAM 226 via display processing unit 216. Display 150 then displays the characters in accordance with the relevant data.

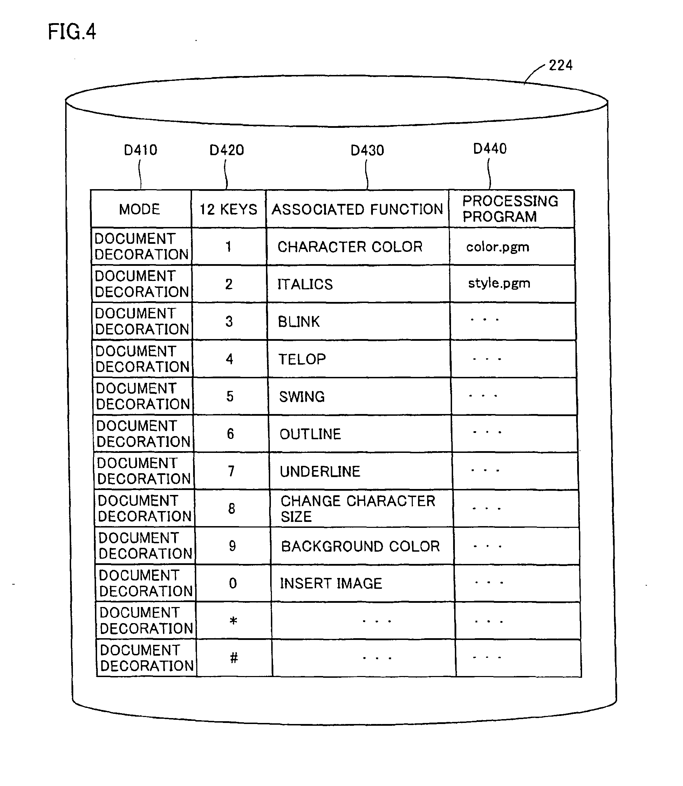

Referring to Fig. 4, the data structure in mobile phone 100 of the present embodiment is further explained. Fig. 4 conceptually shows the correspondence between the data stored in editing data storage unit 224 and the programs. The data is for decorating characters. Here, the decoration of characters refers to modification of character color, modification of background color of the character, modification of the typeface, and modification of other displayed manners of the character.

As shown in Fig. 4, information indicating an operation mode of mobile phone 100 is stored in a data area D410, information identifying 12 keys 140 in a data area D420, information representing functions assigned to respective 12 keys 140 in a data area D430, and processing programs for implementing the functions in a data area D440. As such, for an operation mode (e.g., document decoration mode) of mobile phone 100, each of 12 keys 140 is related to corresponding one of the functions involved with the mode. Thus, when the user inputs a command via 12 keys 140, the function corresponding to the relevant key is executed. For example, assume that the user depresses the numeric "1" button among 12 keys 140. Since this button has been assigned the modification of character color, the function of modifying the character color is started based on a processing program "color.pgm". A control structure for executing the function will be described later.

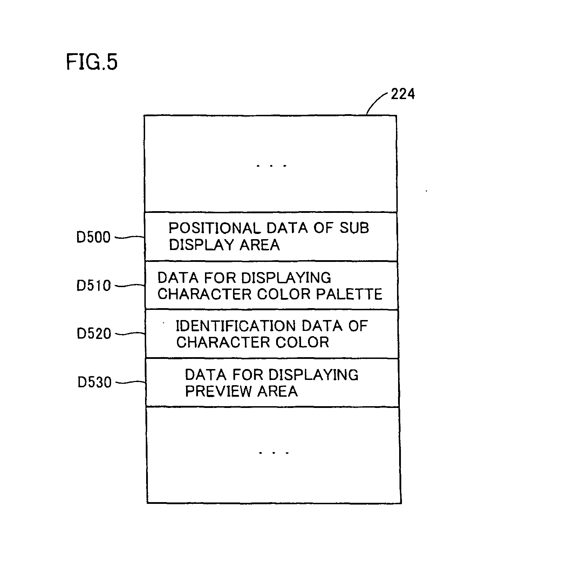

Referring to Fig. 5, the data structure in mobile phone 100 of the present embodiment is further explained. Fig. 5 conceptually shows storage of data in editing data storage unit 224 of mobile phone 100.

As shown in Fig. 5, positional data of a sub display area is stored in a data area D500. Here, the sub display area refers to an area that is displayed on display 150 in accordance with a predetermined condition (e.g., depression of a prescribed button by the user). Displayed in this area are functions for modifying character color, character size and other typefaces of the text, as shown in Fig. 4. The positional data of the sub display area is coordinate data corresponding to a corner of the rectangular area being displayed in the display area of display 150. The position where the rectangle is to be displayed can be set arbitrarily based on the relevant data.

Data for displaying a character color palette is stored in a data area D510.
The character color palette is for displaying a set of colors available for modification of the "character color" that is for example assigned to the numeric "1" key of 12 keys 140, as shown in data area D430 of Fig. 4. The data for displaying the character color palette includes data of the colors that can be displayed on display 150 of mobile phone 100, which are associated with the numbers identifying 12 keys 140 for the user to select the respective colors.

Character color identification data is stored in a data area D520. The identification data is for specifying the color selected to modify the character color.
For example, when the user selects the modification of character color for a text displayed on display 150 as the default (e.g., in black), information specifying the black color is stored as initial information. Thereafter, when the user modifies the character color from black to red, information specifying the red color is stored in data area D520.

Data for displaying a preview area is stored in a data area D530. Here, the preview area refers to an area for displaying the character to which the effect of character decoration (e.g., modification of character color) tentatively selected by the user is reflected. For example, when the character in black as the default has been selected as described above, the character is displayed in black on the preview area. Thereafter, when the user manipulates operation button 130 for a cursor or depresses a numeric button to select color of red, then the color of the character displayed on the preview area is changed to red.

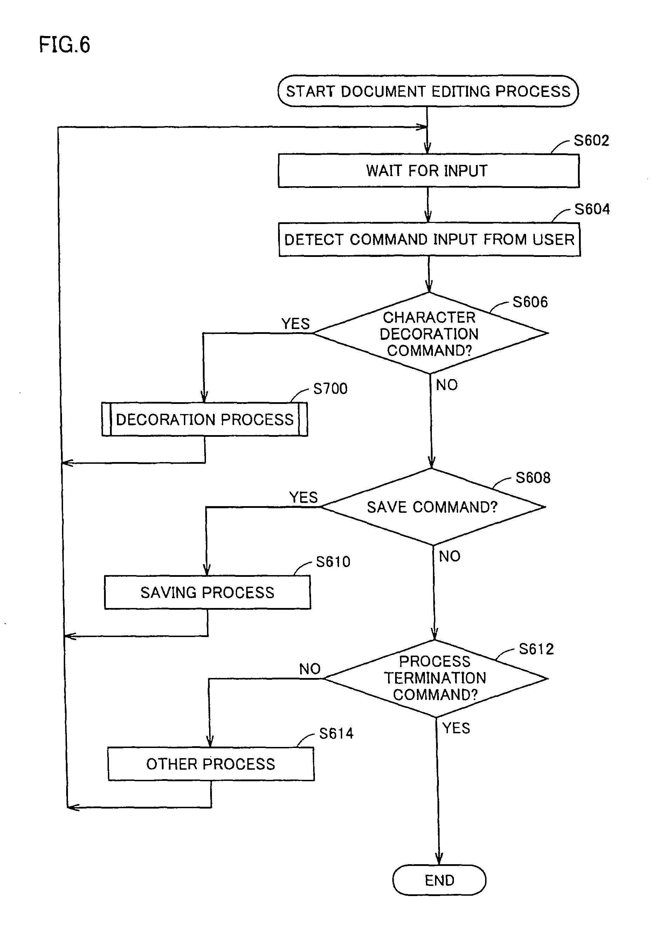

Referring to Fig. 6, a control structure of mobile phone 100 according to the present embodiment is explained. Fig. 6 is a flowchart illustrating a procedure of a document editing process carried out by control unit 250 of mobile phone 100. A program product for implementing this process is prestored in editing data storage unit 224 or other memory, which is read from the memory when the user inputs a prescribed command via input unit 202, and the prescribed process is executed.

In step S602, control unit 250 waits for an input via input unit 202. In step S604, it detects a command input by the user.

In step S606, control unit 250 determines whether the input command is a command to decorate characters. This determination is made e.g. based on whether the signal output from input unit 202 is a signal indicating character decoration. If the user command is the character decoration command (YES in step S606), the process goes to step S700. If not (NO in step S606), the process goes to step S608.

In step S608, control unit 250 determines whether the user command is a save command. If the user command is the save command (YES in step S608), the process goes to step S610. If not (NO in step S608), the process goes to step S612.

In step S610, control unit 250 carries out a predetermined data saving process. In step S612, control unit 250 determines whether the user command is a command to terminate the process. If the user command is the process termination command (YES in step S612), the process is terminated. If not (NO in step S612), the process goes to step S614.

In step S614, control unit 250 carries out another process that has been preassigned to the command input via input unit 202.

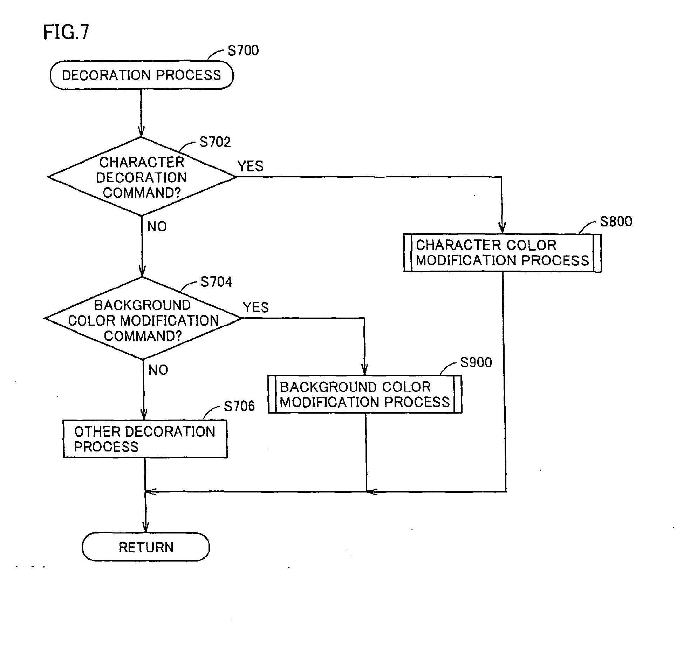

In step S700, control unit 250 carries out a decoration process, which will be described below in conjunction with Fig. 7. With this process, character color, background color or other displayed manner of the character being displayed on display 150 is modified.

Referring to Fig. 7, the control structure of mobile phone 100 is further explained. Fig. 7 is a flowchart illustrating a procedure of the decoration process carried out by control unit 250. In the following description, a process of modifying the character color and a process of modifying background color in the area where the character is displayed will be described as specific examples of the decoration process, although it may include other processes, such as a process of modifying character size and a process of modifying a character of standard format to italics, for implementation of the functions prepared for mobile phone 100 as shown in Fig. 4.

In step S702, control unit 250 determines whether a user command is a command to decorate characters. Here, the character decoration refers to modification of size, color, display position or other displayed manner of the text being displayed on display 150. If the user command is the character decoration command (YES in step S702), the process goes to step S800. If not (NO in step S702), the process goes to step S704.

In step S704, control unit 250 determines whether the user command is a command to modify background color. Here, the background color refers to a color displayed at the back of the character in the area where the character is displayed. If the user command is the background color modification command (YES in step S704), the process goes to step S900. If not (NO in step S704), the process goes to step S706.

In step S706, control unit 250 carries out a predetermined decoration process corresponding to the command input by the user. This process may involve any of the functions prepared for mobile phone 100 as described above.

In step S800, control unit 250 carries out a character color modification process, which will be described later. With this process, the color of the selected character is modified. In the following, the case of modifying the character color will be described as an example of the character decoration, although it is not restricted thereto.

In step S900, control unit 250 carries out a background color modification process, which will be described later. With this process, the background color of the relevant character is modified on display 150.

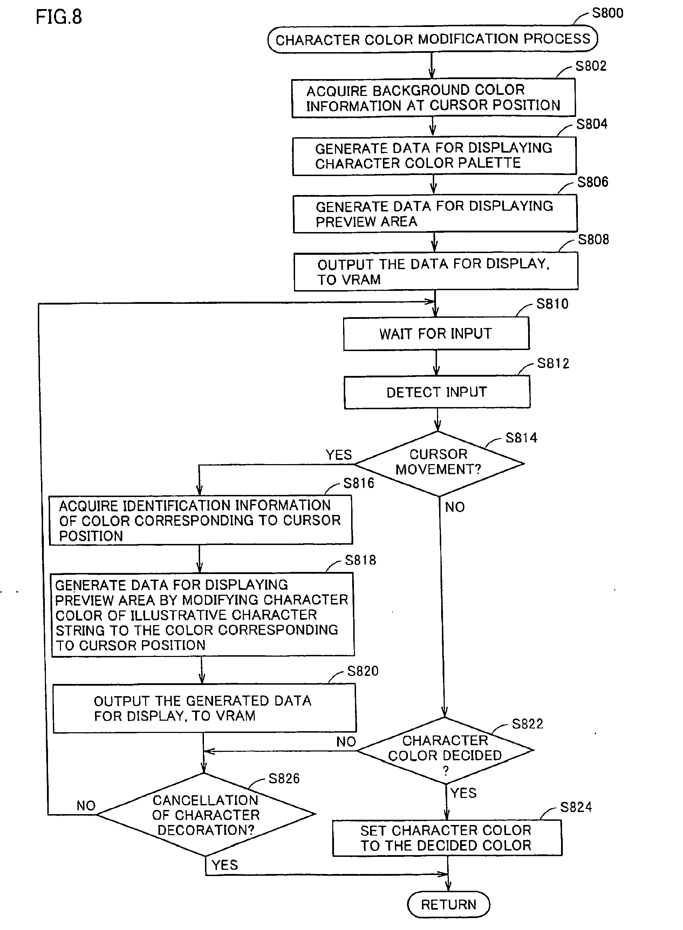

Referring to Fig. 8, the control structure of mobile phone 100 of the present embodiment is further explained. Fig. 8 is a flowchart illustrating a procedure of the character color modification process carried out by control unit 250.

In step S802, control unit 250 acquires information of background color at the cursor position. The information includes data for specifying what color the background color is.

In step S804, control unit 250 generates data for displaying a character color palette, based on a predetermined program. For example, to define the correspondence between the colors on the character color palette and 12 keys 140, data having each of the colors associated with the corresponding number is generated.

In step S806, control unit 250 generates data for displaying a preview area. The data is for showing an effect of the character decoration on the character selected by the user. The data is stored in data area D530 shown in Fig. 5, for example.

In step S808, control unit 250 outputs the respective data for use in display, stored in editing data storage unit 224, to VRAM 226. Display 150 then displays the sub display area, the character color palette and the preview area, based on the data written into VRAM 226.

In step S810, control unit 250 switches to the status where it waits for a command input via input unit 202. In step S812, control unit 250 detects an input of the command via input unit 202.

In step S814, control unit 250 determines whether the input corresponds to movement of the cursor. For example, the determination is made based on whether the signal output from input unit 202 is a signal corresponding to movement of operation button 130. If the input from the user is the cursor movement (YES in step S814), the process goes to step S816. If not (NO in step S814), the process goes to step S822.

In step S816, control unit 250 acquires identification information of the color corresponding to the cursor position. Specifically, the color selected by the user from the character color palette displayed on display 150 is recognized.

In step S818, control unit 250 generates the data for displaying the preview area, by modifying the character color of a predetermined, illustrative character string to the color corresponding to the cursor position. For example, data of the illustrative character string is read out of the data area of editing data storage unit 224 by the display processing unit, and the character color code of the character string is replaced with the character color code of the selected color. The data is stored in data area D530 of editing data storage unit 224. In step S820, control unit 250 outputs the generated data for the preview area to VRAM 226. As a result, display 150 displays the illustrative character string with its color modified to the color selected by the user.

In step S822, control unit 250 determines whether the character color has been decided from the character color palette. For example, the determination is made based on whether the command that the user has input via input unit 202 is a command to fix the selection. If the character color has been decided (YES in step S822), the process goes to step S824. If not (NO in step S822), the process goes to step S826.

In step S824, control unit 250 sets the character color to the decided color. As a result, in data area D310 of text data temporary storage unit 220 shown in Fig. 3, the character color data for the text having undergone the modification of the character color is replaced with the data of the decided color.

In step S826, control unit 250 determines whether the user command is a command to cancel the character decoration. For example, the determination is made based on whether the user has input a cancel command via input unit 202. If the user command is the character decoration cancel command (YES in step S826), the process is terminated, and returns to the program having been called for the character color modification process. If not (NO in step S826), the process returns to step S810, where control unit 250 again waits for an input from the user.

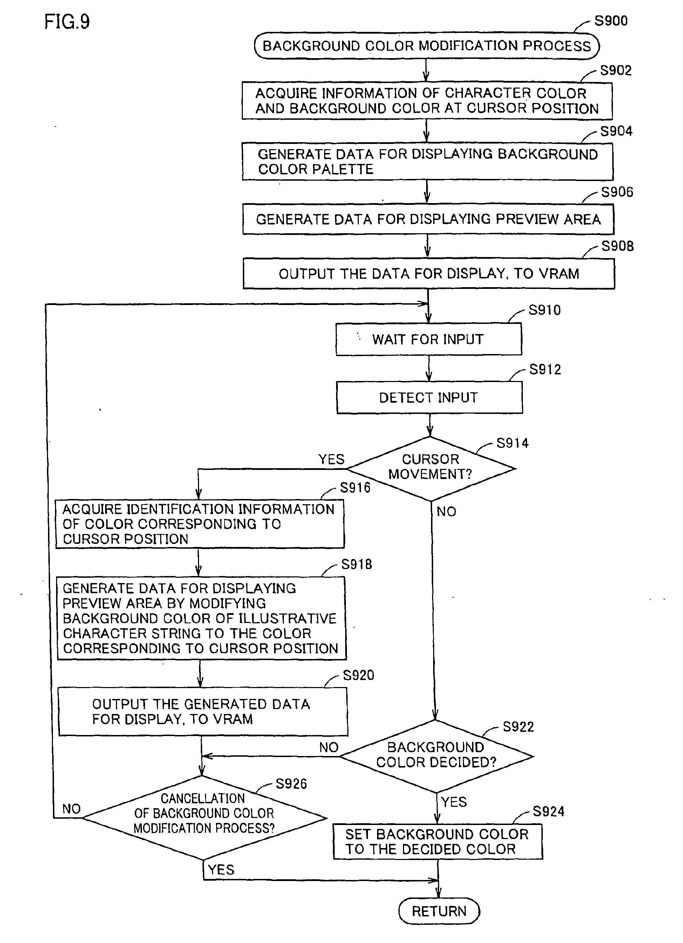

Referring to Fig. 9, the control structure of mobile phone 100 according to the present embodiment is further explained. Fig. 9 is a flowchart illustrating a procedure of the background color modification process carried out by control unit 250 of mobile phone 100. This process is carried out, when the user selects a menu for modifying the background color on the text editing screen, in response to an input to fix the selection.

In step S902, control unit 250 acquires information of the character color and the background color at the cursor position. The information has been stored in a prescribed area of data area D310 in text data temporary storage unit 220.

In step S904, control unit 250 generates data for displaying a background color palette. The data is for displaying the background color palette on display 150. The data includes options of the background color that can be displayed on display 150 and numeric characters assigned to the respective options.

In step S906, control unit 250 generates data for displaying a preview area. The data is for displaying, when the user is to modify the background color, a character with an effect of the tentative selection reflected thereto.

In step S908, control unit 250 outputs the generated data for use in display, to RAM 226. As a result, display 150 can display the background color palette, and the preview area as the sub area.

In step S910, control unit 250 waits for an input to input unit 202. In step S912, control unit 250 detects an input via input unit 202.

In step S914, control unit 250 determines whether the input is a command of cursor movement. If the input is the command of cursor movement (YES in step S914), the process goes to step S916. If not (NO in step S914), the process goes to step S922.

In step S916, control unit 250 acquires information identifying the color corresponding to the cursor position. For example, the information is data stored in data area D310 of text data temporary storage unit 220, in the area corresponding to the position where the cursor has reached.

In step S918, control unit 250 modifies the background color of a predetermined illustrative character string to the color corresponding to the cursor position, and generates data for displaying the preview area. The generated data for the preview area is stored in data area D530 of editing data storage unit 224.

In step S920, control unit 250 outputs the generated data for the preview area to VRAM 226. As a result, display 150 displays, in the preview area, the character with its background color changed to the background color selected by the cursor operation of the user.

In step S922, control unit 250 determines whether the background color has been decided. If the background color has been decided (YES in step S922), the process goes to step S924. If not (NO in step S922), the process goes to step S926.

In step S924, control unit 250 sets the background color to the decided color. Specifically, the information identifying the color selected by the user is updated, and written into data area D310 of text data temporary storage unit 220.

In step S926, control unit 250 determines whether a command received via input unit 202 is a command to cancel the background color modification process. If the input command is the cancel command of the background color modification process (YES in step S926), the process is terminated, and returns to the process having been called for the background color modification process. If not (NO in step S926), the process returns to step S910.

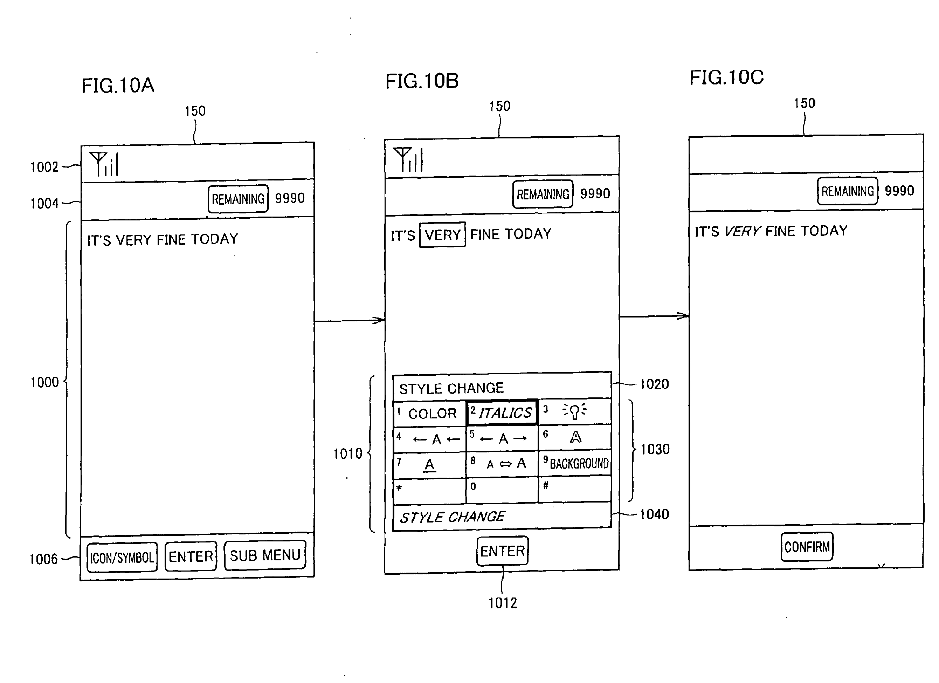

Hereinafter, a displayed manner of the display area on display 150 of mobile phone 100 according to the present embodiment is explained with reference to Figs. 10A-10C. Figs. 10A-10C show a screen displayed on display 150. To clearly show changes in manner of display, the case of modifying the typeface from standard one to italics is explained. This modification process is carried out when the user depresses the numeric button "2" among 12 keys 140 of mobile phone 100. At this time, as shown in data area D420 of Fig. 4, the process for implementing the function "italics" having been assigned to the numeric button "2" of 12 keys 140 is executed. It is noted that the displayed manner on display 150 changes similarly upon modification of any of the character color, background color and other character decorations that were explained above in conjunction with the control structure.

The screen shown in Fig. 10A is displayed when the user calls a text editing program for preparing a mail or other text. For example, the display is realized when the document editing process shown in Fig. 6 is started. The image at this time is displayed based on the data stored in editing data storage unit 224, VRAM 226 or other memory of mobile phone 100. An area 1000 corresponds to an area where a character input screen is displayed when a text editing program is executed. An area 1002 is for displaying the information indicating the working statuses of mobile phone 100, which include the radiowave receiving status, the battery remaining amount and other information. An area 1004 is for displaying the information regarding the function during execution in mobile phone 100. An area 1006 is for displaying the process corresponding to the function during execution. In Fig. 10A, a software keyboard with which the user can input a command to display an input screen of "icon/symbol", a command to input "enter", and a command to display a screen of "sub menu", respectively, are displayed by way of example.

The screen shown in Fig. 10B is displayed when the user selects modification of typeface of character from a sub menu. The display is realized when a command to decorate characters in Fig. 6 is input (YES in step S604). For example, when the user specifies the range of "very" from the input character string and inputs the command to display a sub menu, an area 1010 is displayed. Area 1010 includes an area 1020 for displaying a title indicating a user-selectable item (hereinafter, also called a "palette item" as appropriate), an area 1030 for displaying a palette on which the user actually makes a selection, and an area 1040 for displaying an effect produced by a content of the selected palette item. Here, the content of the palette item refers to a changeable item such as character color, typeface or other decoration.

Here, in area 1030, the cursor for selecting an item from the list of sub menus is displayed on a predetermined position (e.g. on the palette item labeled with "1"). It however may be displayed approximately at the center (e.g. on the palette item labeled with "5" or "8"), in which case the user can move the cursor always from the center, facilitating the item selection. This can improve the operability of mobile phone 100.

Referring again to Fig. 10B, when the user selects the palette item labeled with "2" from the palette, the display of the palette is switched to reflect the selection (e.g., the frame of the relevant item is displayed in bold line). The title of "style change" is displayed in area 1020. Further, the display indicating the effect of the content of this palette item, i.e., "style change", is displayed in area 1040. Specifically, since the modification of the typeface has been selected in Fig. 10B, a predetermined character string, e.g., "style change", is modified in typeface to italics and displayed in area 1040.

When the user selects the palette item of "style change" and depresses a button corresponding to the enter key 1012, a predetermined decoration process (step S700) is executed. Specifically, as shown in Fig. 10C, the selected character string, i.e., "very", is modified into italics, and the display of area 1010 disappears. The user is then allowed to continue editing the document.

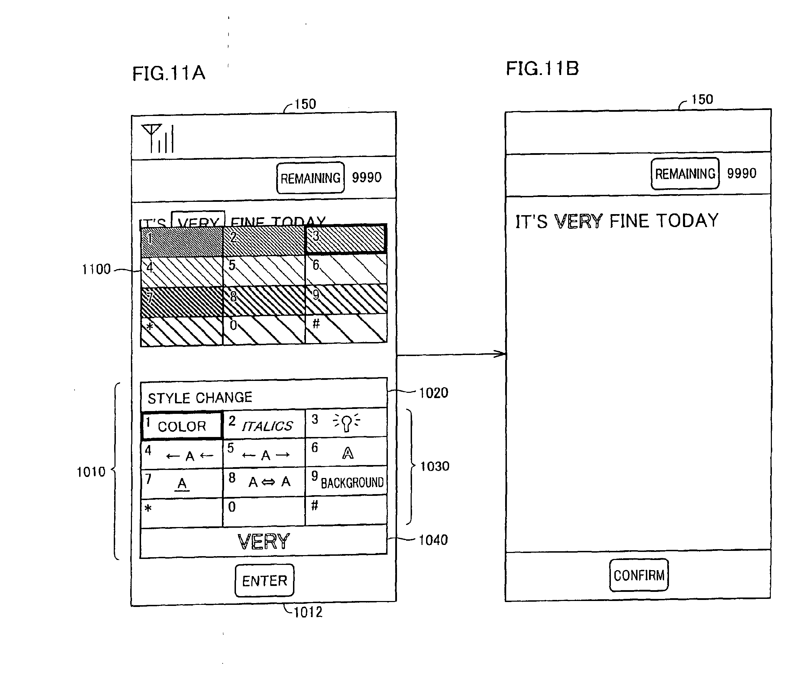

Referring to Figs. 11A and 11B, the displayed manner in the display area on display 150 of mobile phone 100 according to the present embodiment is further explained. Figs. 11A and 11B show a screen displayed on display 150.

In Fig. 11A, with area 1010 being displayed, if the user selects another item and decides a decoration function to be conducted, an area 1100 is displayed. For example, the user selects the palette item labeled with "1" and depresses operation button 130. The numeric character "1" has been assigned the function of modifying the "character color". Thus, in response to the depression of the button, options of changeable colors are displayed in area 1100 of display 150.

That is, options of the character color that mobile phone 100 can display are displayed to clearly show the correspondence with respective 12 keys 140, for example. On this display, when the user selects the palette item labeled with "1", the character color is changed to the selected color, as shown in area 1040. At this time, the modification of the character color has not been fixed. Thereafter, when the user conducts an input for fixation (e.g., depression of operation button 130), the selected color is actually reflected to area 1000, resulting in the display shown in Fig. 11B.

Hereinafter, an operation of mobile phone 100 of the present embodiment based on the above-described structures and flowcharts is explained. The operation when the user modifies the character color is explained with reference to the screen shown in Figs. 11A and 11B.

After the user starts the process of editing characters in a prescribed display area of display 150, if the user inputs a command to decorate characters via input unit 202 (YES in step S604), then a select screen for the decoration process (step S700) is displayed (in area 1030 of Fig. 11A). When the user selects a menu for decorating characters from the select screen (YES in step S702), the program for the character color modification process is read out of editing data storage unit 224 for execution (step S800).

The information of the background color at the cursor position shown in the display area of display 150 is acquired (Fig. 8, step S802), and the data for displaying the character color palette and the data for displaying the preview area are generated (steps S804, S806). When the respective data for display are written into a prescribed area of VRAM 226 (step S808), the character color palette including options for the character color and the preview area are displayed (in areas 1100 and 1040 in Fig. 11A), in addition to the area displaying the characters during editing.

When the user depresses a button to enter the status where the character color is selectable (i.e., an active status), the cursor is displayed at a predetermined position (e.g., at the palette item of black color) in the character color palette. At this time, the display is changed to grayout the remaining palette items, to notify the user of their non-selected statuses.

When the user depresses the cursor control key to input a command to move the cursor displayed on the palette (YES in step S814), the color corresponding to the palette item where the cursor has reached, i.e., the palette item labeled with the numeric character "3" in area 1100 of Fig. 11A, is specified (step S816). The character color of the illustrative character string prestored in editing data storage unit 224 is changed to the specified color, to generate the data for displaying the preview area (step S818). When the display data is output to a prescribed data area of VRAM 226 (step S820), the illustrative character string having its color modified to the selected character color is displayed in the preview area on display 150 (area 1040 in Fig. 11A).

When the user does not intend to change the selection of the character color (NO in step S826), the user conducts an input operation for fixation by, e.g., depressing the key provided at input unit 202 or displayed on display 150 (NO in step S814 and YES in step S822). Accordingly, the color of the character selected in the display area is changed to the character color selected by the user in the preview area (step S824), and the resultant character is displayed on display 150 (Fig. 11B).

When the user completes the character decoration process (Fig. 7, step S700), mobile phone 100 returns to a normal editing status, and waits for an input (step S602). When the user inputs a command to save the text data (step S608), the data is stored in a prescribed storage area of editing data storage unit 224 (step S610). Thereafter, when the user inputs a command to terminate the process (YES in step S612), mobile phone 100 terminates the execution of the program for the editing process, and outputs data of a preset waiting screen to a prescribed area of VRAM 226. As such, mobile phone 100 switches to a prescribed waiting status.

As described above, according to mobile phone 100 as an embodiment of the present invention, when a user selects a character while editing the characters and conducts an operation to modify decoration, options for the modification are displayed in the form of a palette. When the user selects a particular palette item from the options, the prescribed character is displayed in an area (e.g., area 1040 in Fig. 10B) other than the area corresponding to the character editing screen, based on the decoration function associated with the content of the palette item selected. Since the effect of modification of the decoration is displayed as a preview, the user can confirm the effect of the character decoration by referring to the editing screen. Accordingly, it is possible to provide mobile phone 100 that enables easy confirmation of the effect of modification of the displayed manner on a screen.

### Variation

Hereinafter, a variation of the present embodiment is explained. In the embodiment described above, the display for selecting the character decoration is displayed on display 150 of mobile phone 100, with the display of the character input screen left intact. In the case of mobile phone 100 or other information communication terminal, particularly in the case of the terminal having a small display area on display 150, the selected item and the preview screen (hereinafter, referred to as the "sub area") may be displayed to cover the character input screen during editing. For example, the data representing the display position of the item select screen for the decoration process may include an overlapping portion with the range data specifying the display position of the character input screen. When the display data generated based on the relevant data is read out, display 150 displays the sub area in front of the display of the character input screen.

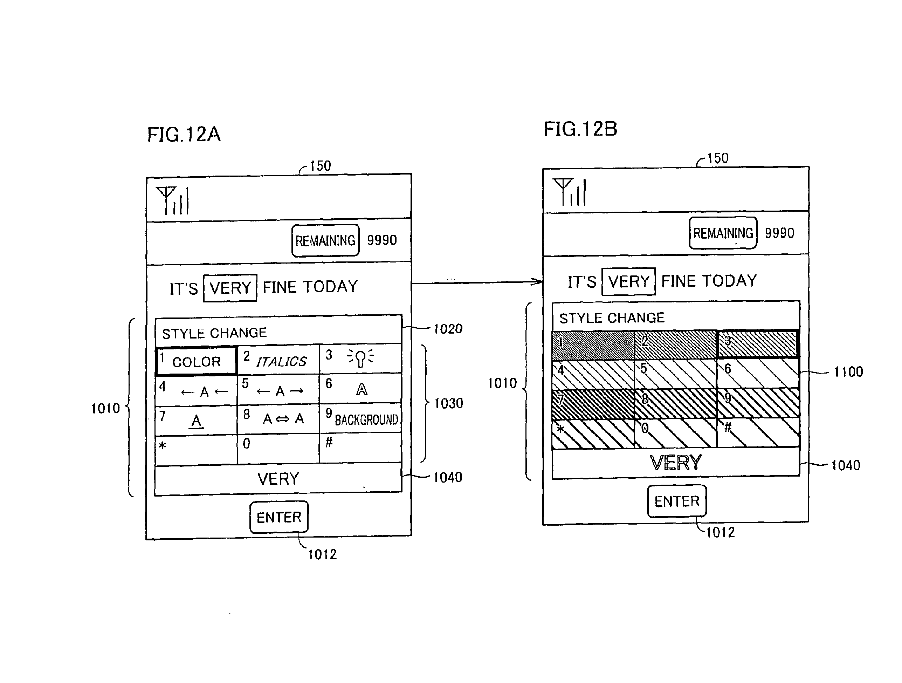

Referring to Figs. 12A and 12B, a screen displayed on display 150 of mobile phone 100 according to the present variation is explained. Figs. 12A and 12B illustrate that the selected item and the preview screen are displayed on top of the display of the character input screen.

As shown in Fig. 12A, when display 150 is small in size, the sub area is displayed overlapping the character input screen. Specifically, the sub area includes areas D1020, D1030 and D1040. The sub area is displayed in front of area D1010 where the character input screen is displayed. For example, the display is realized based on the display information prestored in editing data storage unit 224. The display information includes a position for displaying the sub area, and color, shape and other information of the sub area. When the data for the sub area is written into a VRAM based on such information, display 150 can display the sub area overlapping the character input screen.

When the user selects a character color and depresses the numeric button "1", a palette including options for modification of the character color is displayed, as shown in Fig. 12B. When the user depresses the numeric button of "3" in the palette, the character color is changed to the color corresponding to the relevant palette item, which is displayed in area D1040 as a preview.

With this configuration, for example even in the case where the setting of the character decoration function is hierarchically configured, display 150 can successively display a plurality of areas, to display the function of the particular hierarchical level at the forefront (to make it visible to the user). Even in such a case, the user can select the character decoration while at least confirming the effect of the modification displayed in area 1040.

As explained above, a portable information apparatus according to the present invention is implemented with an input unit receiving an external input, an output unit displaying a character or other image, a storage unit storing software for execution of a predetermined process and data necessary for execution of the software, and a processing unit performing the predetermined process based on the software and the data. The storage unit includes a non-volatile memory and a volatile memory. The software is read from the non-volatile memory to the volatile memory in response to activation of the portable information apparatus, and executes a prescribed process based on the prestored data as well as data input via the input unit. Alternatively, the software may be downloaded via a network from the input unit and stored in the storage unit, or it may be recorded and distributed in the form of a memory card or other data storage medium.

Generally, the portable information apparatus has the input unit, the output unit, the storage unit and the processing unit, in addition to a communication unit for implementation of the communication function. Since the operation of the portable information apparatus having such a hardware configuration is well known, detailed description thereof is not repeated here. Accordingly, it can be said that the most essential part of the present invention is the software stored in the storage unit. When the software according to the present invention is executed in a portable information apparatus having the relevant configuration, the character display method according to the present invention can be implemented as well.

The present invention is applicable to a portable information apparatus, such as a mobile phone and a portable information terminal having an image display area.

Although the present invention has been described and illustrated in detail, it is clearly understood that the same is by way of illustration and example only and is not to be taken by way of limitation, the spirit and scope of the present invention being limited only by the terms of the appended claims.

Further embodiments are:
1. A portable information apparatus, comprising:
   a storage unit (216) storing, associating with a plurality of decoration functions of a character, image data for displaying images each associated with corresponding one of said plurality of decoration functions, and a plurality of processing programs each for implementing corresponding one of said plurality of decoration functions;
   an input unit (202) receiving an external input;
   a display data generation unit (216) generating, in response to an input to select one of said decoration functions, display data for displaying the corresponding image and the character to which said selected decoration is reflected, based on the corresponding image data and the processing program associated with said selected decoration function; and
   a display unit (150) displaying the corresponding image and the character to which said selected decoration is reflected, based on said display data.
2. The portable information apparatus according to item 1, wherein
   said storage unit further stores area data representing a range of a predetermined area in an image display area of said display unit,
   said input unit receives an external input of a character,
   said portable information apparatus further comprising a character data generation unit (214) generating, in response to the input of said character, character data for displaying said character based on said area data,
   said display data generation unit generating said display data based on said area data, and
   said display unit displaying the corresponding image, said input character and the character to which said selected decoration is reflected, based on said display data and said character data.
3. The portable information apparatus according to item 2, wherein
   said area data includes data representing a range of a character display area where said input character is displayed and range data representing a range of a preview display area having an area at least overlapping said character display area, and
   said display data generation unit generates said display data by associating the same with said range data.
4. The portable information apparatus according to item 2, wherein
   said input unit receives an input for selecting a character as an object of modification of said decoration function, and
   said display data generation unit generates said display data in accordance with the character selected as the object of modification of said decoration function.
5. The portable information apparatus according to item 2, wherein
   said input unit receives selection of at least one character and an input of a selected option of said decoration function, and
   said display data generation unit generates said display data by modifying the decoration function of said at least one character selected, to said decoration function specified as the selected option.
6. The portable information apparatus according to item 2, wherein
   said input unit includes a plurality of buttons (140) arranged based on a predetermined positional relation,
   said storage unit stores data for identifying each of said plurality of buttons by associating the same with corresponding one of said image data based on said positional relation, and
   said display data generation unit generates said display data, in response to depression of any of said plurality of buttons, based on the image data associated with said depressed button.
7. The portable information apparatus according to item 2, wherein
   said storage unit stores character data for displaying a predetermined character for each of said decoration functions by associating the same with said decoration function, and
   said display data generation unit generates said display data based on said character data corresponding to the decoration function for which modification was designated.
8. The portable information apparatus according to item 7, wherein said predetermined character includes a character representing the decoration function for which said modification was designated.
9. A portable information apparatus, comprising:
   a storage unit (224) storing, associating with a plurality of decoration functions of a character, image data for displaying images each associated with corresponding one of said plurality of decoration functions;
   an input unit (202) receiving an external input;
   a plurality of processing units (212) each implementing corresponding one of said plurality of decoration functions;
   a display data generation unit (216) generating, in response to an input to select one of said decoration functions, display data for displaying the corresponding image and the character to which said selected decoration is reflected, based on the corresponding image data and said selected decoration function implemented by said processing unit; and
   a display unit (150) displaying the corresponding image and the character to which said selected decoration is reflected, based on said display data.
10. The portable information apparatus according to item 9, wherein said processing units are processing circuits each preconfigured to implement corresponding one of said plurality of decoration functions.
11. A character display method in a portable information apparatus, comprising:
   the step of preparing, associating with a plurality of decoration functions of a character, image data for displaying images each associated with corresponding one of said plurality of decoration functions, and a plurality of processing programs each for implementing corresponding one of said plurality of decoration functions;
   the step (S604) of receiving an external input;
   the step (S700) of generating, in response to an input to select one of said decoration functions, display data for displaying the corresponding image and the character to which said selected decoration is reflected, based on the corresponding image data and the processing program associated with said selected decoration function; and
   the step of displaying the corresponding image and the character to which said selected decoration is reflected based on said display data.
12. A program product for implementing a character display method in a portable information apparatus, the program product causing the portable information apparatus to perform:
   the step of preparing, associating with a plurality of decoration functions of a character, image data for displaying images each associated with corresponding one of said plurality of decoration functions, and a plurality of processing programs each for implementing corresponding one of said plurality of decoration functions;
   the step (S604) of receiving an external input;
   the step (S700) of generating, in response to an input to select one of said decoration functions, display data for displaying the corresponding image and the character to which said selected decoration is reflected, based on the corresponding image data and the processing program associated with said selected decoration function; and
   the step of displaying the corresponding image and the character to which said selected decoration is reflected based on said display data.
13. A character display method in a portable information apparatus, comprising:
   the step of preparing, associating with a plurality of decoration functions of a character, image data for displaying images each associated with corresponding one of said plurality of decoration functions;
   the step (S604) of receiving an external input;
   the processing steps (S700) each implementing corresponding one of said plurality of decoration functions;
   the step of generating, in response to an input to select one of said decoration functions, display data for displaying the corresponding image and the character to which said selected decoration is reflected, based on the corresponding image data and said selected decoration function implemented by said processing step; and
   the step of displaying the corresponding image and the character to which said selected decoration is reflected based on said display data.
14. A program product for implementing a character display method in a portable information apparatus, the program product causing the portable information apparatus to perform:
   the step of preparing, associating with a plurality of decoration functions of a character, image data for displaying images each associated with corresponding one of said plurality of decoration functions;
   the step (S604) of receiving an external input;
   the processing steps (S700) each implementing corresponding one of said plurality of decoration functions;
   the step of generating, in response to an input to select one of said decoration functions, display data for displaying the corresponding image and the character to which said selected decoration is reflected, based on the corresponding image data and said selected decoration function implemented by said processing step; and
   the step of displaying the corresponding image and the character to which said selected decoration is reflected, based on said display data.

## Claims

1. A portable information apparatus (100), comprising:
a plurality of buttons (14) configured to accept an instruction to the portable information apparatus;
a storage device (220, 222, 224, 226) for storing data;
a display device (15) having a character display region (1000) for displaying characters;
a control unit (250) connected to the storage device (220, 222, 224, 226), wherein, when a plurality of characters input to the portable information apparatus (100) are displayed in the character display region (1000) and an instruction for displaying a sub-menu is input in a state of a part of the plurality of characters being selected, the control unit (250) is configured to cause the display device (15) to display a region (1010) for decorating characters,
wherein the region (1010) includes a region (1030) for displaying a plurality of items selectable for decoration of a character,
wherein the plurality of items are configured to be displayed in accordance with the arrangement of the plurality of buttons (14), and
wherein the control unit (250) is configured to cause a cursor for selecting any one of the plurality of items to be displayed in the center of the arrangement of the plurality of items.

2. The portable information apparatus (100) according to claim 1,
wherein the region (1010) further includes a preview region (1040) for displaying a selected character;
wherein a part of the plurality of items includes a plurality of sub-items selectable for decoration of a character;
wherein, when an item selected from the plurality of items corresponds to said part of the plurality of items, the control unit (250) is configured to display in the display region (1000) a region (1100) for selecting the plurality of sub-items; and
wherein the control unit (250) is configured to display in the preview region (1040) a character decorated in a display manner corresponding to a sub-item selected from the plurality of sub-items.

3. The portable information apparatus (100) according to claim 2, wherein the control unit (250) is configured to display the region (1100) for selecting the plurality of sub-items over the region (1030) for displaying the plurality of items.
